# EUROPEAN PATENT APPLICATION

(11) **EP 2 187 496 A1**
(43) Date of publication of application: **19.05.2010**
(21) Application number: 09175872.2
(22) Date of filing: 13.11.2009
(51) Int. Cl.: H02J 3/18, H02J 15/00, H02M 5/458, H02M 7/538

(54) **SMES apparatus, interface device for SMES and driving method therefor**

(30) Priority: 13.11.2008 JP 2008291374
(71) Applicant: Mitsubishi Heavy Industries, Tokyo 108-8215 (JP)
(72) Inventor: Kawashima, Hiroshi, Takasago-shi, Hyogo (JP)
(74) Representative: Intes, Didier Gérard André

(57) **Abstract**

A loss can be reduced upon a current holding operation of a SMES. A superconducting magnetic energy storage (SMES) system includes a loop composed of a superconducting coil, a thyristor, and a synchronous rectification circuit, and a loop current flow through the loop. In a loop current hold mode, a switching control device of the synchronous rectification circuit turns on the thyristor, and the synchronous rectification circuit compensates for the loop current by rectifying an AC current from an AC power source to generate a DC current.

## Description

### TECHNICAL FIELD

The present invention relates to a superconducting magnetic energy storage system.

### BACKGROUND ART

As an electric power storage system for storing electric power and discharging the electric power in response to a request, a Superconducting Magnetic Energy Storage (SMES) has been developed. By the flow of an electric current through a superconducting coil in a superconducting state, the electric power is stored in the SMES. Supply of the electric power to the superconducting coil and discharge of the electric power from the superconducting coil are carried out via a converter, which converts the electric power between the SMES and an AC power source of an electric power system.

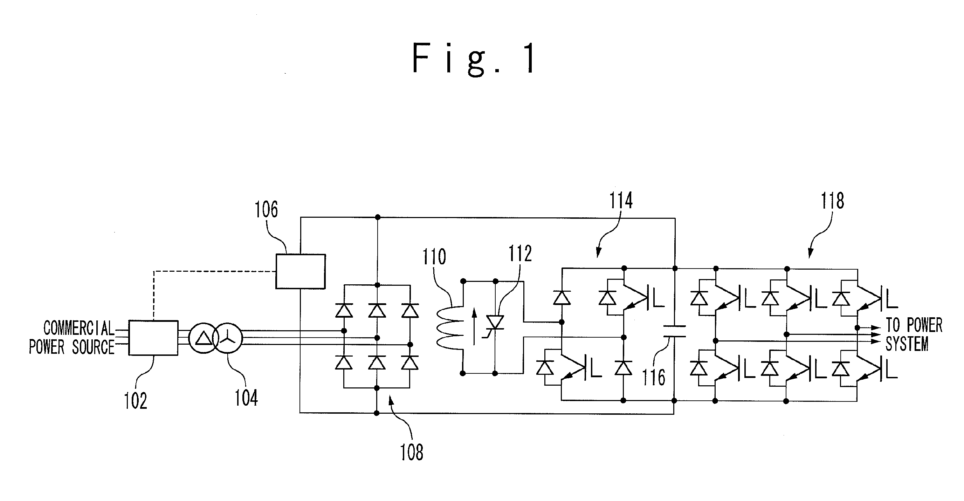

Fig. 1 shows a charge and discharge circuit of a conventional SMES. Referring to Fig. 1, a short-circuit thyristor 112 is connected to a superconducting coil 110 in parallel with an electric current direction of a forward direction. Both ends of the superconducting coil 110 are connected to a current-voltage converter 114. A smoothing capacitor 116 that is placed in a DC intermediate part of the current-voltage converter 114 is connected to a power system interconnection inverter 118. Further, as a charge circuit for the DC intermediate part, a voltage control converter 102, a booster transformer 104, a voltage control device 106, and a rectification circuit 108 are connected to the DC intermediate part.

The voltage control device 106 generates a voltage control signal on the basis of a voltage of the smoothing capacitor 116. Upon receiving supply of AC power from a commercial power source, the voltage control converter 102 generates electric power in response to the voltage control signal generated by the voltage control device 106. The electric power generated by the voltage control converter 102 is boosted by the booster transformer 104 to be supplied to the rectification circuit 108. The rectification circuit 108 rectifies the supplied AC power and supplies it to the DC intermediate part.

When initially charging the superconducting coil 110, electric power is supplied to the superconducting coil 110 from the charge circuit for the DC intermediate part via the DC intermediate part of the current-voltage converter 114 or from an electric power system via the power system interconnection inverter 118. When the power system interconnection inverter 118 carries out bidirectional power conversion between the DC intermediate part and the electric power system after completion of the initial charge, charge and discharge of energy to and from the superconducting coil 110 is performed.

A holding operation for holding an electric current stored in the superconducting coil 110 will be carried out as follows. Between the superconducting coil 110 and the DC intermediate part, the current-voltage converter 114 is connected which bi-directionally converts the electric current of the superconducting coil 110 and a voltage of the smoothing capacitor 116. By short-circuiting both ends of the superconducting coil 110 due to control of a switching element of this current-voltage converter 114, the electric current within the superconducting coil 110 circulates to be held without discharging to the outside. In this way, it is possible to carry out storage of the electric power and interconnection of the power system.

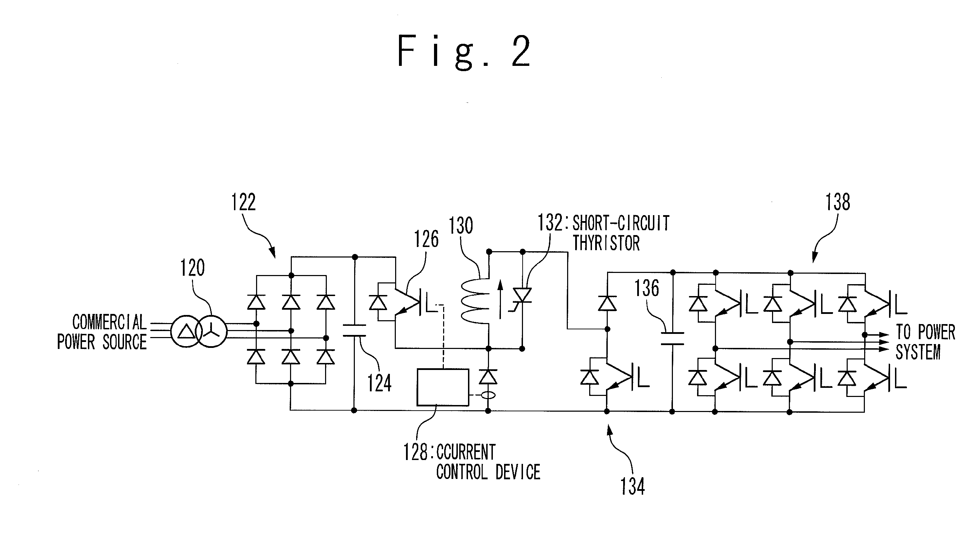

Fig. 2 shows other example of the SMES system. According to this example, a charge circuit for exclusive use is provided which is used for charge of a superconducting coil 130. A charge circuit formed by a step-down transformer 120, a rectification circuit 122, a smoothing capacitor 124, an IGBT element 126, and a current control device 128 charges the superconducting coil 130 by the electric power supplied from the commercial power source to compensate for the energy that is decreased during the holding operation. The energy held in the superconducting coil 130 is charged and discharged to the electric power system via a current-voltage converter 134, a smoothing capacitor 136, and a power system interconnection inverter 138.

An example of a power system interconnection circuit of a SMES is described in Japanese Laid-Open Patent Application JP-A-Showa 61-262038.

In such the SMES system, a loss is caused in a self turn off element and a diode of the current-voltage converters 114 and 134 upon the holding operation and the energy stored in the superconducting coil 110 is decreased. In order to compensate for decrease in energy, the charge operation is carried out.

In a self turn off element used in a current-voltage converter as shown in Figs. 1 and 2, an ON junction voltage loss and a switching loss are high. Particularly, in the use of power storage, these losses become higher since the self turn off element having the higher-speed operation and the higher reverse withstand voltage is required. Further, a plurality of elements including a diode is connected in series in order to configure the circuit, so that there is a problem such that a loss upon holding the electric current in a standby condition is higher.

Further, in such a circuit, in the case where a trouble occurs in the current-voltage converter and in the case where a power source of the electric power system breaks down, it is hard to safely reduce an electric current of the superconducting coil and hold the electric current necessary for protecting the coil device. As a countermeasure in the case of occurrence of such an event, it is desired to provide a protection circuit. In addition, it is desired to provide the protection circuit having a simple configuration.

Moreover, in the case where the trouble occurs in the current-voltage converter and in the case where the power source of the electric power system breaks down, in the circuit shown in Fig. 1, it is not possible to carry out the holding operation for holding the electric current of the superconducting coil. Therefore, in the case of an aggregate device provided with a plurality of superconducting coils, due to an error of magnetic field distribution, a characteristic of a superconducting wire material is lowered, the electric current is excessively increased, and excessive electromagnetic power is generated between coils. In order to enhance a safety, it is desired to avoid occurrence of these problems.

Further, when the superconducting coil 110 and the current-voltage converter 114 are applied with the electric current, respectively, and when the superconducting coil 110 is performed in the current charge operation, it is possible to neither perfectly divide the superconducting coil 110 from the current-voltage converter 114 nor connect the superconducting coil 110 to the current-voltage converter 114. Therefore, there is a possibility that this is detrimental to maintenance, check, and repair of the SMES system.

### DISCLOSURE OF INVENTION

Therefore, an object of the present invention is to provide a superconducting magnetic energy storage system, in which a loss is lower in a current hold mode.

Another object of the present invention is to provide a superconducting magnetic energy storage system, which is capable of holding an electric current of a superconducting coil in safety and is capable of reducing the electric current by a simple protection circuit in the case where a trouble occurs in a current-voltage converter or a power source of an electric power system breaks down.

Still another object of the present invention is to provide a superconducting magnetic energy storage system including an aggregate device provided with a plurality of superconducting coils, which is capable of holding electric currents of the superconducting coils in the case where a trouble occurs in the current-voltage converter and in the case where a power source of the electric power system breaks down; and is capable of preventing lowering of a characteristic of a superconducting wire material, excessively increasing the electric current, and generating excessive electromagnetic power between coils due to errors of the distribution of magnetic fields.

Yet still another object of the present invention is to provide a superconducting magnetic energy storage system, when the superconducting coil and the current-voltage converter are capable of being perfectly divided in a current hold mode of the superconducting coil, or when the electric current is charged into the superconducting coil, or when the electric current is extracted from the superconducting coil, the superconducting coil is capable of being connected to the current-voltage converter.

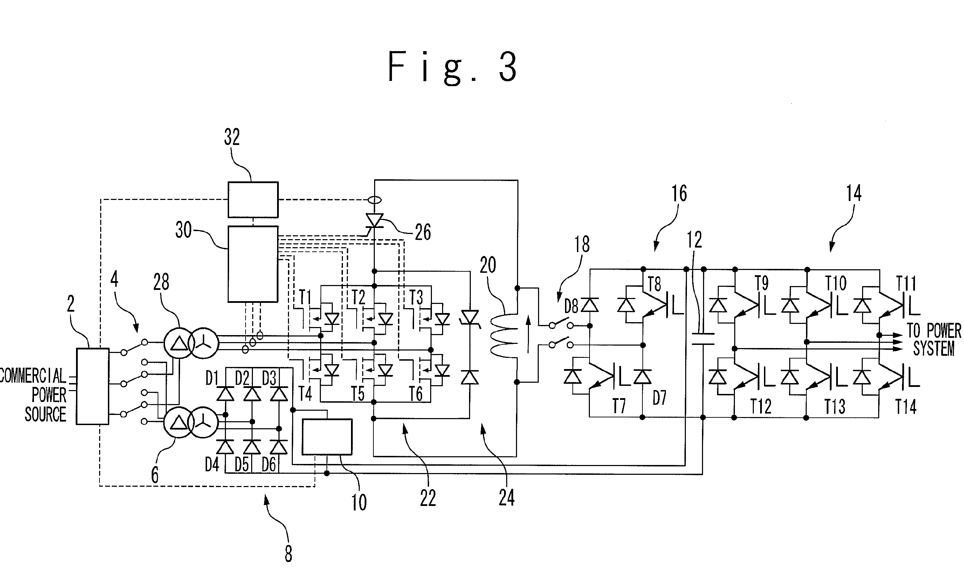

As shown in Fig. 3, the superconducting magnetic energy storage (SMES) system according to the present invention includes a superconducting coil that functions as an SMES, a synchronous rectification circuit, and a thyristor that is connected between the superconducting coil and the synchronous rectification circuit. The synchronous rectification circuit carries out a supplementary operation for generating a DC current by rectifying an AC current supplied from an AC power source and supplying the DC current to the superconducting coil. A switching control device that is included in the synchronous rectification circuit turns on the thyristor in a loop current hold mode to hold the electric current of the superconducting coil. Thereby, the supplementary operation of the electric current is carried out.

The SMES system according to the present invention further includes a power system interconnection inverter and a current-voltage converter that converts an electric current supplied by the superconducting coil into a voltage to supply the voltage to the power system interconnection inverter and converts a voltage supplied by the power system interconnection inverter into an electric current to supply the electric current to the superconducting coil.

The SMES system according to the present invention further includes a disconnect switch for disconnecting the superconducting coil from the current-voltage converter in the loop current hold mode.

In the SMES system according to the present invention, the switching control device applies an inverse voltage to the thyristor to turn off the thyristor by carrying out a charge operation for supplying the electric power to the superconducting coil by the current-voltage converter upon a discharge operation for supplying the electric power stored by the superconducting coil to the power system interconnection inverter after the loop current hold mode.

The SMES system according to the present invention further includes an initial charge device for generating a DC current by rectifying anAC electric power to be supplied from an AC power source and charging a smoothing capacitor that is connected between the current-voltage converter and the electric power system interconnection inverter; and a switch for alternatively connecting the output of theACpower source to the synchronous rectification circuit and to the initial charge device.

In the SMES system according to the present invention, the switching control device turns off a voltage/ current control converter and turns on a power MOSFET configuring the synchronous rectification circuit when the electric current of the superconducting coil is held and the charge operation to the superconducting coil is not carried out.

In the SMES system according to the present invention, the switching control device turns off a voltage-current control converter and turns off all of power MOSFETs configuring the synchronous rectification circuit when turning off a short-circuit thyristor with an electric current circulating between the superconducting coil and the short-circuit thyristor.

An interface device for a superconducting magnetic energy storage (SMES) according to the present invention includes a voltage-current control converter that generates a DC current by rectifying an AC current supplied from an AC power source and supplies the DC current to a superconducting coil functioning as an SMES, a synchronous rectification circuit, and a thyristor that is connected between the superconducting coil and the synchronous rectification circuit. A switching control device that is included in the synchronous rectification circuit turns on the thyristor to carry out a charge operation upon a holding operation for holding an electric current of the superconducting coil.

A driving method of an interface device for a superconducting magnetic energy storage (SMES) according to the present invention includes a step of turning on the thyristor that is connected between a superconducting coil and a synchronous rectification circuit upon a holding operation for holding an electric current of the superconducting coil that functions as the SMES and a step of the synchronous rectification circuit generating a DC current by rectifying an AC current supplied from an AC power source and supplying the DC current to the superconducting coil.

According to the present invention, it is possible to reduce the loss upon the current holding operation of the SMES.

### BRIEF DESCRIPTION OF THE DRAWINGS

Fig. 1 is a circuit diagram showing a power system interconnection circuit of a conventional SMES;
Fig. 2 is a circuit diagram showing a power system interconnection circuit of another conventional SMES;
Fig. 3 is a circuit diagram showing a circuit configuration of a SMES system according to an embodiment of the present invention;
Fig. 4 is a diagram for explaining an operation of the SMES system according to the embodiment;
Fig. 5 is a diagram for explaining the operation of the SMES system according to the embodiment; and
Fig. 6 is a diagram for explaining the operation of the SMES system according to the embodiment.

### MODE FOR CARRYING OUT THE INVENTION

Referring to the drawings, a superconductingmagnetic energy storage system (the SMES system) according to the present invention will be described below. Fig. 3 is a circuit diagram showing a circuit configuration of the SMES system according to an embodiment of the present invention. Referring to Fig. 3, the SMES system includes a superconducting coil 20. The superconducting coil 20 serves as a coil to store electric power due to circulation of an electric current in a superconducting state. One end of the superconducting coil 20 is connected to an anode of a diode D8 of a current-voltage bidirectional converter 16 and a collector of an Insulated Gate Bipolar Transistor (IGBT) element T7 via one switch of a disconnect switch 18. The other end of the superconducting coil 20 is connected to a cathode of a diode D7 of the current-voltage bidirectional converter 16 and an emitter of an IGBT element T8 via the other switch of the disconnect switch 18. Free wheeling diodes are connected to the IGBT elements T7 and T8, respectively. A cathode of the diode D8 and a collector of the IGBT element T8 are connected to one end of a smoothing capacitor 12. An emitter of the IGBT element T7 and an anode of the diode D7 are connected to the other end of the smoothing capacitor 12.

One end of the smoothing capacitor 12 is connected to collectors of IGBT elements T9, T10, and T11 of a power system interconnection inverter 14. The other end of the smoothing capacitor 12 is connected to emitters of IGBT elements T12, T13, and T14 of the power system interconnection inverter 14. A connecting point between an emitter of the IGBT element T9 and a collector of the IGBT element T12 is connected to a U phase terminal of a three-phase AC of system power. A connecting point between an emitter of the IGBT element T10 and a collector of the IGBT element T13 is connected to a V phase terminal of the three-phase AC of the system power. A connecting point between an emitter of the IGBT element T11 and a collector of the IGBT element T14 is connected to a W phase terminal of the three-phase AC of the system power. The system power is supplied to the superconducting coil 20 via the power system interconnection inverter 14 (to be driven as a rectifier), the smoothing capacitor 12, the current-voltage bidirectional converter 16, and the disconnect switch 18. The electric power stored in the superconducting coil 20 is supplied to the system power via the disconnect switch 18, the current-voltage bidirectional converter 16, the smoothing capacitor 12, and the power system interconnection inverter 14.

One end of the superconducting coil 20 is connected to an anode of a short-circuit thyristor 26. A cathode of the short-circuit thyristor 26 is connected to one end of a synchronous rectification circuit 22. The other end of the synchronous rectification circuit 22 is connected to the other end of the superconducting coil 20. An overvoltage protection circuit 24 is connected to the synchronous rectification circuit 22 in parallel. Respective sources of power MOSFET elements T1, T2, and T3 are connected to one end of the synchronous rectification circuit 22. Respective drains of power MOSFET elements T4, T5, and T6 are connected to the other end of the synchronous rectification circuit 22. A connecting point between a drain of the power MOSFET element T1 and a source of the power MOSFET element T4 is connected to a U phase of the output of the three-phase AC of a step-down transformer 28. A connecting point between a drain of the power MOSFET element T2 and a source of the power MOSFET element T5 is connected to a V phase of the output of the three-phase AC of the step-down transformer 28. A connecting point between a drain of the power MOSFET element T3 and a source of the power MOSFET element T6 is connected to a W phase of the output of the three-phase AC of the step-down transformer 28. The synchronous rectification circuit 22 carries out a supplementary charge operation, in which a DC current is generated by rectifying anAC current supplied from a commercial power source through a voltage-current control converter 2 to be supplied to the superconducting coil 20.

A current control device 32 detects an electric current flowing from the superconducting coil 20 into the short-circuit thyristor 26 to generate a current detecting signal. A switching control device 30 controls switching of gates of the power MOSFET elements T1 to T6 by using current detecting signals for electric currents flowing from a step-down transformer 28 into the drain and source of the power MOSFET elements. The switching control device 30 turns on the short-circuit thyristor 26 in a holding operation for holding an electric current by the superconducting coil 20 to operate the voltage-current control converter 2 and then, the switching control device 30 carries out a supplementary charge operation using the synchronous rectification circuit 22.

A voltage between both ends of the smoothing capacitor 12 is detected by a voltage control device 10. The both ends of the smoothing capacitor 12 are connected to a rectification circuit 8. To one end of the smoothing capacitor 12, cathodes of diodes D1, D2, and D3 of the rectification circuit 8 are connected, and to the other end of the smoothing capacitor 12, anodes of diodes D4, D5, and D6 of the rectification circuit 8 are connected. A connecting point between an anode of the diode D1 and a cathode of the diode D4 is connected to a U phase of the output of the three-phase AC of a booster transformer 6. A connecting point between an anode of the diode D2 and a cathode of the diode D5 is connected to a V phase of the output of the three-phase AC of the booster transformer 6. A connecting point between an anode of the diode D3 and a cathode of the diode D6 is connected to a W phase of the output of the three-phase AC of the booster transformer 6.

The SMES system is connected to system power, which is a main charge and discharge destination for using the superconducting coil 20 as an electric power storage device, via the power system interconnection inverter 14. In addition, the SMES system is connected to the commercial power source via the voltage-current control converter 2 in order to supply electric power for initial charge of the smoothing capacitor 12 and electric power for compensation for a loss in the holding operation of the superconducting coil 20. The voltage-current control converter 2 converts the electric power supplied from this commercial power source and outputs the converted electric power. The output of the three-phase AC of the voltage-current control converter 2 is alternatively connected to the inputs of respective three-phase ACs of the booster transformer 6 and the step-down transformer 28 by means of a switch 4. In other words, by means of the switch 4, the commercial power source is alternatively connected to the synchronous rectification circuit 22 and an initial charge device. The voltage-current control converter 2, the booster transformer 6, the rectification circuit 8, and the voltage control device 10 function as the initial charge device. The voltage-current control converter 2, the step-down transformer 28, and the current control device 32 function as a coil charge device for loss compensation.

In an initial charge mode for performing the initial charge on the smoothing capacitor 12, the switch 4 connects the output of the voltage-current control converter 2 to the input of the booster transformer 6. In this case, the voltage-current control converter 2 converts the voltage of the electric power supplied from the commercial power source on the basis of a voltage detecting signal generated by the voltage control device 10 to supply the converted electric power to the booster transformer 6.

In an electric current hold mode for compensating for the loss upon the holding operation of the superconducting coil 20, the switch 4 connects the output of the voltage-current control converter 2 to the input of the step-down transformer 28. In this case, the voltage-current control converter 2 converts the electric current of the electric power supplied from the commercial power source on the basis of a current detecting signal generated by the current control device 32 to supply the converted electric power to the step-down transformer 28.

The power source for the loss compensation of the superconducting coil 20 may have a small capacity compared to a electric power capacity of the of the current-voltage bidirectional converter 16. In addition, it is desirable that this power source can be provided even in the case that the system power breaks down. Further, it is required that the power source has an ability of a low voltage and a high current. From these conditions, the electric power, to which the supplied commercial power source is power-converted by an output-variable inverter or a combination of a semiconductor switch and the step-down transformer, is supplied for the loss compensation.

In the case of using the inverter as the voltage-current control converter shown in Fig. 3, it is possible to downsize the step-down transformer 28 and improve control responsibility of the step-down transformer 28 by using a higher frequency. Therefore, the inverter for the initial charge of the smoothing capacitor 12 placed at the DC intermediate part can be also used as the inverter for the loss compensation of the superconducting coil 20 and vice versa.

An operation of the SMES system including the above-described configuration will be described below.

In the initial charge mode for providing the initial charge to the smoothing capacitor 12, the switch 4 connects the output of the voltage-current control converter 2 to the input of the booster transformer 6. In this case, the voltage-current control converter 2 converts the voltage of the electric power supplied from the commercial power source on the basis of a voltage detecting signal generated by the voltage control device 10 to supply the converted electric power to the booster transformer 6. The booster transformer 6 boosts the supplied voltage, performs the three-phase full wave rectification by the rectification circuit 8, and charges the smoothing capacitor 12. In this case, the current-voltage bidirectional converter 16 is disconnected from the superconducting coil 20 by the disconnect switch 18.

In the charge mode for storing the electric power in the superconducting coil 20, the disconnect switch 18 connects the superconducting coil 20 to the current-voltage bidirectional converter 16. By introducing the system power into the power system interconnection inverter 14 and controlling ON and OFF of gates of respective IGBT elements T9 to T14 at predetermined timing, the electric current is rectified. By controlling ON and OFF of gates of the IGBT elements T7 and T8 of the current-voltage bidirectional converter 16 at predetermined timing, the rectified supplied electric power is converted into the electric power to be supplied to the superconducting coil 20.

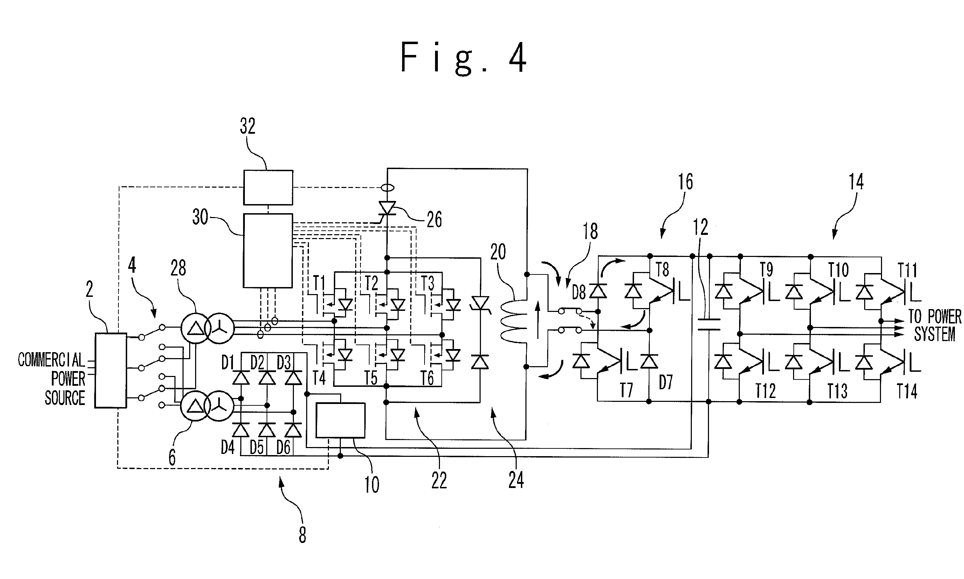

An operation for shifting the operation (the charge mode) for charging and storing electric power to the holding operation (the current hold mode) for holding the electric power charged in the superconducting coil 20 will be described below. At first, causing short-circuit in the superconducting coil 20 by the self turn off switching element and the diode of the current-voltage bidirectional converter 16 with the short-circuit thyristor 26 turned off, the charged electric power is held. Fig. 4 illustrates this operation. Such operation is carried out in order to prevent short-circuit of the DC intermediate part of the current-voltage bidirectional converter 16 and reduce the ON loss of the short circuit with the thyristor 26.

In detail, during this operation, the electric current flows through two paths alternatively. In a first path, the electric current flowed from one end of the superconducting coil 20 returns to the other end of the superconducting coil 20 through the diode D8 and the IGBT element T8. In a second path, the electric current flowed from one end of the superconducting coil 20 returns to the other end of the superconducting coil 20 through the IGBT element T7 and the diode D7. In order to equalize a load, ON and OFF of the gates of the IGBT elements T7 and T8 are controlled so that a usage time of the first path becomes equal to a usage time of the second path.

If the electric current of the superconducting coil 20 is small and a generated voltage with the short circuit on the side of the current-voltage bidirectional converter 16 is low, there is a possibility that a forward voltage when the short-circuit thyristor 26 is turned on is deficient. In order to prevent such a situation, it is desirable that the switch 4 is switched to the side of the step-down transformer 28 so as to drive the coil charge device and the synchronous rectification circuit 22 is controlled to carry out the charge operation using the synchronous rectification. Due to such operation, the short-circuit thyristor 26 is reliably turned on.

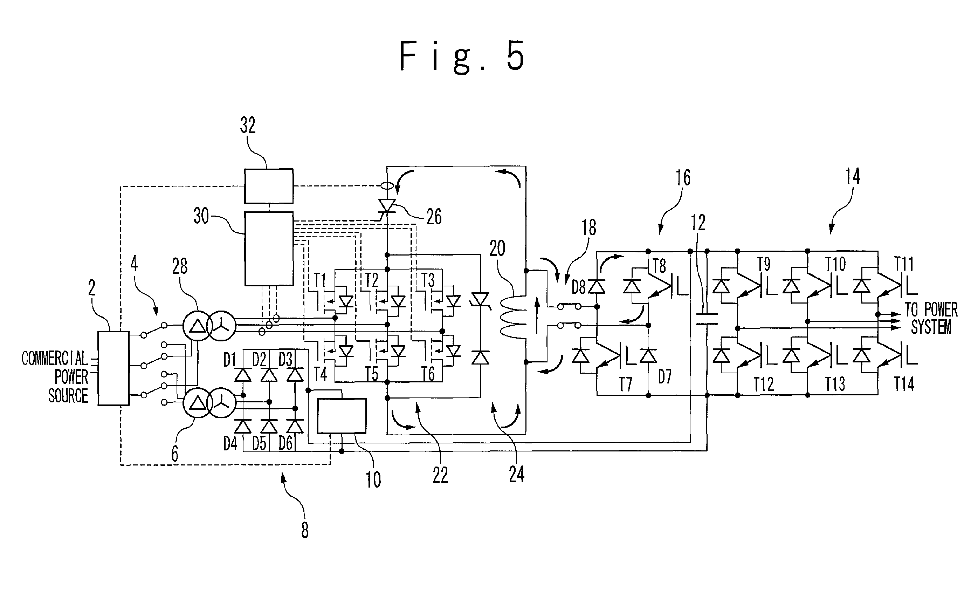

After the short-circuit thyristor 26 has been turned ON, the electric current conversion operation of the voltage-current control converter 2 and the charge operation of the synchronous rectification circuit 22 are carried out so that the electric current of the superconducting coil 20 becomes a predetermined value. Fig. 5 illustrates such a state.

When it is necessary, such as the time for the holding operation, inspection or the like of the superconducting coil 20, the disconnect switch 18 is capable of disconnecting the superconducting coil 20 from the current-voltage bidirectional converter 16. The electric current flowing from one end of the superconducting coil 20 returns to the other end of the superconducting coil 20 via the short-circuit thyristor 26 and the synchronous rectification circuit 22. The electric current of the superconducting coil 20 is held by this loop circuit.

When the electric current of the superconducting coil 20 is circulating through the side of the short-circuit thyristor 26, the disconnect switch 18 is in an approximate currentless state. Therefore, upon the holding operation, it is possible to disconnect and connect the superconducting coil 20 from and to the current-voltage bidirectional converter 16 by means of the disconnect switch 18 in an approximate currentless state.

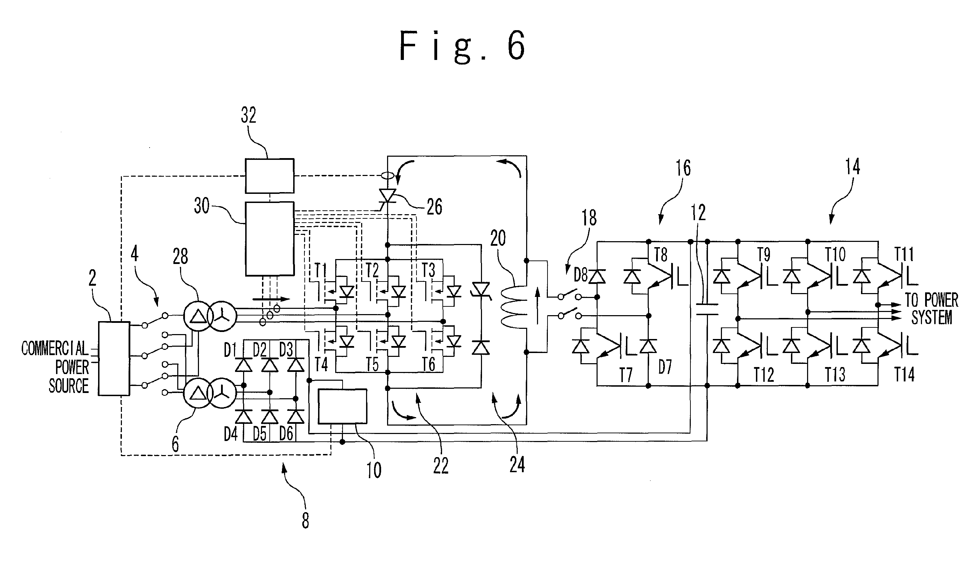

Upon the holding operation (the electric current hold mode), the operation for the loss compensation of the electric current stored in the superconducting coil 20 is carried out. Specifically, on the basis of the current detecting signal of the electric current detected by the current control device 32 and flowing from the superconducting coil 20, the voltage-current control converter 2 converts the electric power of the commercial power source so that the electric current detected value becomes constant to supply the converted electric power to the synchronous rectification circuit 22 via the step-down transformer 28. The switching control device 30 controls timing of ON and OFF of the gates of the power MOSFET configuring the synchronous rectification circuit 22, on the basis of the detected values of the U phase, the V phase, and the W phase of the output of the three-phase AC of the step-down transformer 28. The synchronous rectification circuit 22 rectifies the electric power supplied from the step-down transformer 28 to supply this rectified electric power to the superconducting coil 20. Due to this supplementary charge operation, the loss of the superconducting coil 20 is compensated. Fig. 6 shows electric currents upon the holding operation and the charge operation, which have been described above.

Due to such operations, compensation for lost electric power of the superconducting coil 20 circuit can be made with high efficiency. In addition, as a switching element of the synchronous rectification circuit 22 used for the charge power source, an element having a small ON resistance and a reverse withstanding voltage about tens of volts can be used. Therefore, it is possible to prepare a charge circuit for at a lower cost.

The coil charge device can be disconnected from the circuit for the power system interconnection by the disconnect switch 18 upon the supplementary charge operation. As a result, it is possible to carry out charge of the DC power in order to compensate for and test individually the loss in a standby mode of the superconducting coil 20 without being influenced by the operations in the power system side and the converter side. In other words, in a current standby mode of the superconducting coil 20, it is possible to transfer all of the electric currents flowing through the short-circuiting circuit formed of the switching elements and the diodes that are placed on the side of the converter to the circuit via the short-circuit thyristor 26, so that short-circuit of the switching element of the current-voltage bidirectional converter 16 becomes unnecessary.

The synchronous rectification circuit formed of the power MOSFETs has the advantage of being able to make the loss very small by the following operations. Each of the power MOSFETs has a small ON resistance so that the electric current can flow in two directions. Upon the rectification operation, the switching control device 30 detects the direction of the electric current that is supplied from the power source (in detail, supplied from the step-down transformer 28). Then, on the basis of this detected value, detecting the operations of parallel diodes (parasitic diodes) of respective power MOSFETs, then, when applying the electric current to the diodes, the switching control device 30 turns ON the power MOSFETs placed in parallel to these diodes at the same time. Due to such a control, it is possible to make the ON voltage of the diode approximately zero by appearances. As a result, it is possible to keep the loss in the synchronous rectification circuit very small.

In the holding operation using the current-voltage converter 114 as shown in Fig. 1, the loss is caused when the electric current passes through one diode and one self-excitation element in the standby mode of the superconducting coil 110. On the contrary, according to the present embodiment shown in Fig. 3, it is possible to reduce the loss to the value near the voltage loss of one short-circuit thyristor 26. In addition, compared to the case that a three level system is employed as the current-voltage bidirectional converter, in the three level system, more self-excitation elements are connected for short-circuiting. Therefore, the loss reduction effect according to the SMES system of the present embodiment is greater than that of the case of using the three-level system.

Further, in the case of the holding operation for holding the electric power of the superconducting coil 20 without use of the supplementary charge operation, it is desirable to carry out the following control. The voltage-current control converter 2 stops supply of the electric power for charging to the synchronous rectification circuit 22. The switching control device 30 turns on at least one of the power MOSFET elements T1 to T6 configuring the synchronous rectification circuit 22. Due to such a control, it is possible to reduce the short-circuit circulation loss of the superconducting coil current in the standby-mode during a period that no charge has been made to an amount approximately equal to the ON voltage of one short-circuit thyristor 26.

Next, an operation of the SMES system for shifting the coil charge standby-mode (the electric current hold mode) that has been described above to the discharge operation mode (the discharge mode) to supply the electric power to the current-voltage bidirectional converter 16 will be described below. Upon this shift operation, it is necessary to turn off the short-circuit thyristor 26. At first, the disconnect switch 18 is turned on. The switching control device 30 turns off the gate of the short-circuit thyristor 26. It is necessary to make a current value to be zero or reverse the direction of the electric current by means of the external circuit since the electric current continues to flow through the thyristor even if the gate is turned off by a separate gate control device. Under an OFF condition of this short-circuit thyristor 26, the charge operation for supplying the electric power to the superconducting coil 20 by driving the current-voltage bidirectional converter 16 is carried out for a short time. Due to this control, an inverse voltage is applied to the short-circuit thyristor 26 and thus the short-circuit thyristor 26 is turned off. As a result, all of the electric currents of the SMES 20 are transferred to the side of the current-voltage bidirectional converter 16.

Upon the above-described shift operation, in order to reduce the initial electric current in the breaking operation for turning off the short-circuit thyristor 26, the following operation will be carried out. The disconnect switch 18 is set to a connection state, and the current-voltage bidirectional converter 16 is set to an operating state. In this state, the switching control device 30 stops the synchronous rectification circuit 22 by turning OFF the all power MOSFETs configuring the synchronous rectification circuit 22 and also stops the voltage-current control converter 2. As a result, an SMES electric current flows through the diodes (the parasitic diodes) that are connected in parallel to the power MOSFETs configuring the synchronous rectification circuit 22. Depending on generation of the ON voltages in these diodes, the voltage between both ends of the superconducting coil 20 is increased by an amount of the ON voltages of the diodes. Under such a control, it is possible to partially transfer the electric current of the superconducting coil 20 to the side of the short-circuiting circuit of the current-voltage bidirectional converter 16. The above-described operation makes it possible to obtain an effect of being able to reduce the initial electric current upon the breaking operation of the short-circuit thyristor 26.

According to the above descriptions, as a converter for the system power interconnection, a voltage feed converter is taken as an example. However, a same advantage can be obtained with respect to a current feed converter except for the initial charge operation of the DC intermediate part.

## Claims

1. A superconducting magnetic energy storage (SMES) system comprising:
a superconducting coil configured to be used as an SMES;
a thyristor configured to be connected to said superconducting coil and be turned on in a loop current hold mode; and
a synchronous rectification circuit device configured to be connected to said superconducting coil and said thyristor so as to form a loop and compensate for a loop current flowing through said loop by rectifying a first AC current from an AC power source to generate a first DC current,
wherein said synchronous rectification circuit device includes:
a switching control device configured to turn on said thyristor in said loop current hold mode.

2. The SMES system according to claim 1, further comprising:
a power system interconnection inverter; and
a current-voltage converter configured to convert said loop current into a voltage to supply said voltage to saidpower system interconnection inverter in a discharge mode and convert a voltage supplied by the power system interconnection inverter into a current to charge said loop in a charge mode.

3. The SMES system according to claim 2, wherein said current-voltage converter and said superconducting coil form said loop in said discharge mode and said charge mode.

4. The SMES system according to claim 2, further comprising:
a disconnect switch configured to connect said current-voltage converter to said loop in said discharge mode and said charge mode and disconnect said current-voltage converter from said loop in said loop current hold mode.

5. The SMES system according to claim 2, wherein said thyristor is turned off before said loop current is converted into a voltage and said voltage is supplied to said power system interconnection inverter in said discharge mode.

6. The SMES system according to claim 2, further comprising:
a smoothing capacitor configured to be connected between said current-voltage converter and said electric power system interconnection inverter;
an initial charge device configured to generate a second DC current by rectifying a second AC current from said AC power source and charging said smoothing capacitor in an initial mode before said charge mode; and
a switch configured to connect said AC power source to said initial charge device in said initial mode and connect said AC power source to said synchronous rectification circuit device in said loop current hold mode.

7. The SMES system according to claim 1, wherein said wherein when said compensation for said loop current is not carried out in said loop current hold mode, said switching control device stops supplying said first AC current to said synchronous rectification circuit device and turns on power MOSFETs constituting said synchronous rectification circuit device.

8. The SMES system according to claim 1, wherein said wherein when said short-circuiting thyristor is turned off in said discharge mode, said switching control device stops supplying said first AC current and turns off all power MOSFETs constituting said synchronous rectification circuit device.

9. An interface device for a superconducting magnetic energy storage (SMES), comprising:
a synchronous rectification circuit device configured to compensate for a loop current flowing through a loop by rectifying a AC current from an AC power source to generate a DC current; and
a thyristor configured to be connected between said superconducting coil and said synchronous rectification circuit device and be turned on in a loop current hold mode,
wherein said loop includes said superconducting coil, said thyristor, and said synchronous rectification circuit device,
wherein said synchronous rectification circuit device includes:
a switching control device configured to turn on said thyristor in said loop current hold mode.

10. A driving method of an interface device for a superconducting magnetic energy storage (SMES), comprising:
turning on a thyristor so that a current circulates in a loop in a loop current hold mode, said loop including a superconducting coil, said thyristor, and a synchronous rectification circuit;
said synchronous rectification circuit generating a DC current by rectifying an AC current supplied from an AC power source; and
said synchronous rectification circuit supplying said DC current to said loop.
